# EUROPEAN PATENT APPLICATION

(11) **EP 1 079 160 A1**
(43) Date of publication of application: **28.02.2001**
(21) Application number: 99306000.3
(22) Date of filing: 28.07.1999
(51) Int. Cl.: F16K 39/06

(54) **Ball valve**

(71) Applicant: YAMATAKE CORPORATION, Shibuya-ku, Tokyo 105-0002 (JP)
(72) Inventor: Nomaguchi, Yoshio, Shibuya-ku, Tokyo 105-0002 (JP)
(74) Representative: Votier, Sidney David

(57) **Abstract**

An L-shaped through hole 14 is provided to a ball plug 13 in a valve housing 10 so as to make possible to connect a first side flow passage 11 with a second side flow passage 12 with a direction of an angle of 90 degrees, as well as a branched flow passage 21, having a caliber smaller than that of the first side flow passage 11, which is branched from the first side flow passage 11 is provided to make an operation of a branched pressure of a fluid to the ball plug 13 from the opposite side of the first side flow passage 11.

## Description

### BACKGROUND OF THE INVENTION

### Field of the Invention

The present invention relates to a ball valve for opening and closing a flow passage and adjusting a flow amount of fluid.

### Description of the Prior Art

As a background of this invention, in a prior art floating ball valve, when a fluid differential pressure between an inlet side and an outlet side is large, since a ball plug is strongly pushed onto a seat ring on the outlet side by a fluid pressure thereof, a large operational torque is required to rotate the ball plug. In the case in which an electric actuator is used as an operational means, since the electric operational torque has a limit, the ball plug sometimes does not rotate. In addition, the ball plug is strongly pushed to the outlet side seat ring as described above, so that the outlet side seat ring undergoes extreme wear, and sometimes becomes faulty. A conventional valve which reduces a rotational operation torque of the ball plug has been proposed, and an example thereof will be described hereinbelow.

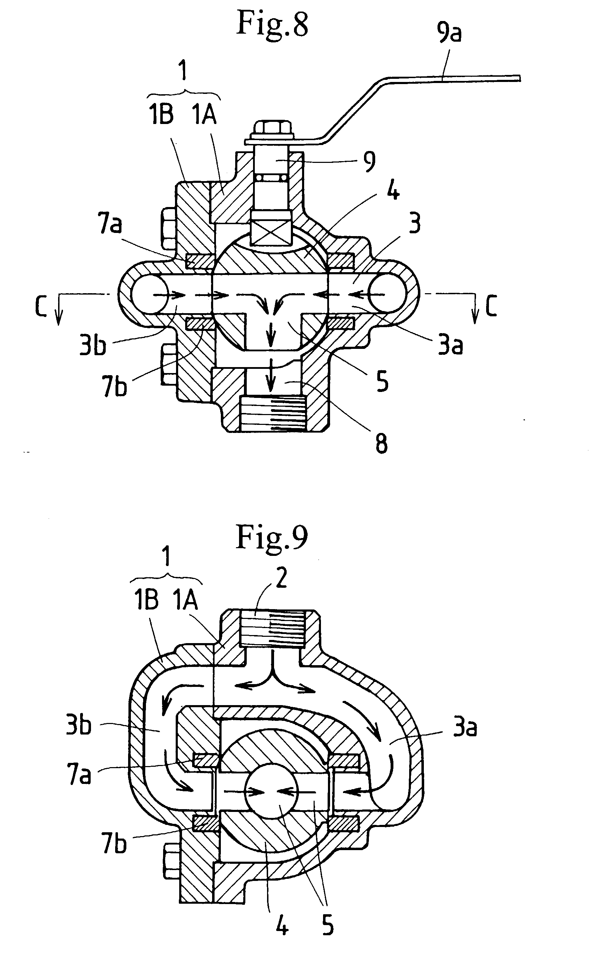

Fig. 8 denotes a longitudinally sectional view showing a conventional ball valve disclosed in Japanese laid-open patent publication No. 3-69867, and Fig. 9 illustrates a sectional view by a C-C line in Fig. 8. In these figures, a reference numeral 1 shows a valve housing, and this valve housing 1 includes a valve case 1A and a cap body 1B. A reference numeral 2 denotes a fluid inlet provided in the valve housing 1, and 3 indicates a first side flow passage formed in the valve housing 1. This first side flow passage 3 consists of two branched flow passages 3a and 3b having the same diameter, and these branched flow passages 3a and 3b are shaped to extend over the valve case 1A and the cap body 1B. A reference numeral 4 denotes a ball plug rotatably stored in the valve housing 1, and 5 is a T-shaped through hole made in the ball plug 4. This through hole 5 can connect through apertures symmetrically positioned on both sides of the ball plug 4 to the branched flow passages 3a and 3b. Reference numerals 7a and 7b are seat rings located to a valve seat of the valve housing 1, and 8 shows a second side flow passage which always connect the fluid outlet of the valve housing 1 and the through hole 5. A reference numeral 9 denotes a valve shaft coupled to the ball plug 4, and 9a shows an operational handle linked to the valve shaft 9.

Next, an operation will be described.

In an open valve state shown in Fig. 8 and Fig. 9, when the T-shaped through hole 5 of the ball plug 4 is connected with the branched flow passages 3a and 3b, fluid which flows from the inlet 2 and branched flow passages 3a and 3b is combined by flowing from both sides of the ball plug 4 into the T-shaped through hole 5. Thus such a combined fluid flows into the second side flow passage 8. When the ball plug is rotated an angle of 90 degrees from this open valve state, the valve turns into a closed valve state. In the closed valve state, the fluid operates on both sides of the ball plug 4 equally from both of the branched flow passages 3a and 3b, so that forces operating on the ball plug 4 are balanced. Therefore, there is no pushing of the ball plug 4 on one of the seat rings 7a and 7b. As a result, extreme wear of the seat rings 7a and 7b can be prevented and a large torque for rotating the ball plug 4 is not required.

### SUMMARY OF THE INVENTION

Since the conventional ball valve is constructed as mentioned above, the fluid which flows into the T-shaped through hole 5 from the both sides of the ball plug 4 collides at a T-shaped cross section in the through hole 5. Therefore the problem arises that a large pressure loss is generated by the collision resistance thereof or a turbulent flow generated at the T-shaped cross section. Furthermore, since the branched flow passages 3a and 3b have the same diameter and are formed on the valve case 1A and the cap body 1B, there is also a problem that the whole valve becomes large and heavy.

This invention is proposed to solve the above-mentioned problem, and aims to obtain a ball valve in which the large rotational torque of the ball plug is not required and the pressure loss can be restrained within the ball plug, as well as reducing the size and weight of the device.

In addition, this invention also aims to obtain a ball valve in which processing is facilitated and the costs can be reduced.

A ball valve according to the present invention comprises:
a valve housing which forms a first side flow passage and a second side flow passage; a ball plug which is placed in the valve housing and which has an L-shaped through hole to connect the first side flow passage with the second side flow passage in a direction of an angle of 90 degrees; first and second seat rings located on the first side flow passage and an opposite side thereof so as to contact with the ball plug; a valve shaft which is coupled with the ball plug for rotationally operating the ball plug in a direction that an opening area of the L-shaped through hole with reference to the first side flow passage is changed; and a branched flow passage which is branched from the first side flow passage for making operation of a pressure of a branched flow of a fluid at a first side from the opposite side of the first side flow passage with reference to the ball plug.

In a ball valve according to the present invention, the valve housing has a ball demounting aperture at the opposite side of the first side flow passage, and a cap body, having a cup shape, in which a branched flow passage is connected with the ball demounting aperture and which is detachably installed to the ball demounting aperture, and a peripheral wall of the cap body includes a through hole for introducing a fluid from the branched flow passage into an inside of the cap body.

Further, a ball valve according to the present invention comprises: a valve housing which forms a first side flow passage and a second side flow passage; a ball plug which is placed in the valve housing and which has a through hole for making possible to connect the first side flow passage with the second side flow passage in a direction of an angle of 90 degrees; first and second seat rings located in the first side flow passage and an opposite side thereof so as to contact with the ball plug; a valve shaft which is coupled to the ball plug for rotationally operating the ball plug in a direction that an opening area of the through hole with reference to the first side flow passage is changed; and a branched flow passage which is branched from the first side flow passage for making operation of a pressure of a branched flow of a fluid at a first side from the opposite side of the first side flow passage with reference to the ball plug.

Further, in a ball valve according to the present invention, the valve housing has a ball demounting aperture at the opposite side of the first side flow passage, and a cap body, having a cup shape, in which a branched flow passage is connected with the ball demounting aperture and which is detachably installed to the ball demounting aperture, and a peripheral wall of the cap body includes a through hole for introducing a fluid from the branched flow passage into an inside of the cap body.

### BRIEF DESCRIPTION OF THE DRAWINGS

Fig. 1 is a longitudinally sectional view showing a ball valve according to an embodiment 1 of the present invention.

Fig. 2 is a sectional view along line A-A in Fig. 1.

Fig. 3 is a sectional view showing an open valve state of Fig. 2.

Fig. 4 is a longitudinally sectional view showing a ball valve according to an embodiment 2 of the present invention.

Fig. 5 is a sectional view by along line B-B in Fig. 4.

Fig. 6 is a sectional view showing an open valve state of Fig. 4.

Fig. 7 is a horizontally sectional view showing a ball valve according to an embodiment 3 of the present invention.

Fig. 8 is a longitudinally sectional view showing a conventional ball valve.

Fig. 9 is a sectional view by along line C-C in Fig. 8.

### DETAILED DESCRIPTION OF THE PREFERRED EMBODIMENT

Preferred embodiments of the invention will now be described hereinbelow.

### Embodiment 1

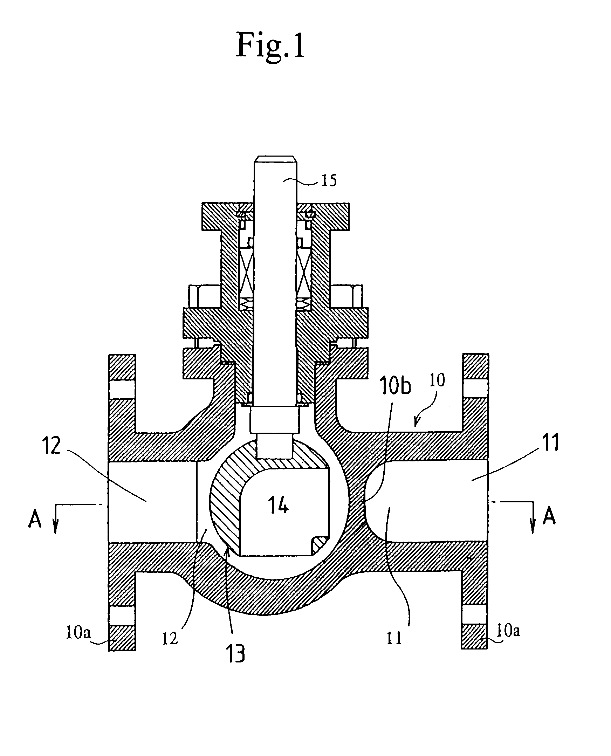

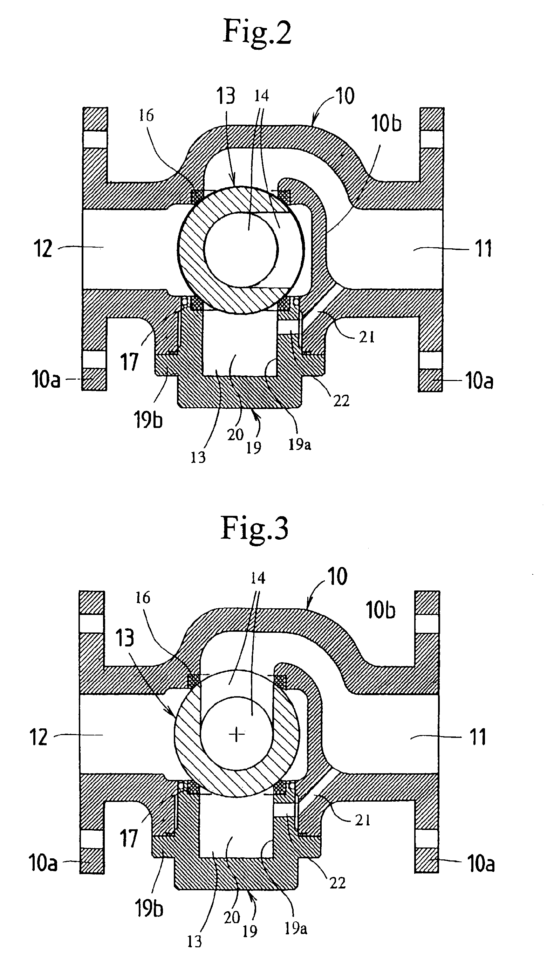

Fig. 1 is a longitudinally sectional view showing a ball valve according to an embodiment 1 of the present invention, and Fig. 2 is a sectional view along line A-A in Fig. 1. Fig. 3 is a sectional view showing an open valve state of Fig. 2. In these figures, a reference numeral 10 denotes a valve housing. This valve housing 10 forms a first side flow passage 11 and a second side flow passage 12, and has a flange 10a at both sides thereof for connecting a pipe. A reference numeral 13 shows a ball plug 13 which is placed rotatably in the valve housing 10, and 14 illustrates an L-shaped through hole (valve hole) provided to the ball plug 13. The L-shaped through hole 14 makes the first side flow passage 11 and the second side flow passage 12 connectable with an approximately orthogonal crossing. A reference numeral 15 indicates a valve shaft detachably coupled to the ball plug 13, and this valve shaft 15 rotationally operates the ball plug 13 in the direction that an opening area of the L-shaped through hole 14 with reference to the first side flow passage 11 is changed.

Reference numerals 16 and 17 show first and second seat rings respectively located at a side of the first side flow passage 11 and an opposite side thereof, and 18 denotes a ball demounting aperture provided on the opposite side of the first side flow passage 11 of the valve housing 10, i.e., the side of an opening extended direction of the first side flow passage 11 with reference to the ball plug 13. The ball demounting aperture 18 is formed with a caliber in which the ball plug 13 and the seat rings 16 and 17 are demountable. Here, the first side flow passage 11 is bent along with an inside wall 10b of the valve housing 10 as shown in Fig. 2, and therefore, an aperture for a mounting portion of the first seat ring 16 and the ball demounting aperture 18 face each other via the ball plug 13.

A reference numeral 19 illustrates a cap body having a cup shape installed detachably on the ball demounting aperture 18, and a flange 19b is provided to a peripheral wall 19a thereof. Here, in the first and second seat rings 16 and 17, the first seat ring 16 is detachably engaged at the side of the first side flow passage 11 in the valve housing 10, and the second seat ring 17 is detachably engaged to a tip end of the peripheral wall 19a of the cap body 19.

A reference numeral 20 shows an inside space of the cap body 19, and the inside space 20 is surrounded by the ball plug 13, the second seat ring 17 and the cap body 19. A reference numeral 21 denotes a branched flow passage having a small diameter branched from the first side flow passage 11, and the branched flow passage 21 is provided to the inside wall 10b in the valve housing 10 so as to make an angle of 45 degrees with reference to a center axis between the openings of the first side flow passage 11 and the second side flow passage 12 which are located at both sides of the valve housing 10. A reference numeral 22 indicates a through flow passage having a small diameter provided to the peripheral wall 19a of the cap body 19. The through flow passage 22 connects the branched flow passage 21 with the inside space 20 of the cap body 19, and is placed so as to make an angle of 90 degrees with reference to the center axis of the cap body 19. Accordingly, the branched flow passage 21 and the through flow passage 22 form a bypass flow passage to introduce the first side fluid into the inside space 20 of the cap body 19 from the first side flow passage 11. In addition, at least one of the branched flow passage 21 and the through flow passage 22 is extended in the direction of inside periphery of the ball demounting aperture 18, so that the branched flow passage 21 and the through flow passage 22 can be easily connected when the cap body 19 is engaged with the ball demounting aperture 18.

Next, an operation will be briefly described.

In the closed valve state shown in Fig. 1 and Fig. 2, the fluid of the first side flow passage 11 is divided into a fluid which flows in the direction to the first seat ring 16 along with the inside wall 10b of the valve housing 10, a bypass fluid which flows in the branched flow passage 21, and the bypass fluid which flows into the inside space 20 of the cap body 19 through the through flow passage 22 of the cap body 19. Therefore, an equal fluid pressure operates on the ball plug 13 from the side of the first seat ring 16 and the side of the second seat ring 17. Thus, since forces operating on the ball plug 13 canceled out, the ball plug 13 is not pressed onto one of the first and second seat rings 16 and 17.

If the ball plug is rotated by the angle of 90 degrees from such a closed valve state, the L-shaped through hole 14 of the ball plug 13 connects the first side flow passage 11 with the second side flow passage 12, thus makes an open valve state. In this open valve state, the fluid at the side of the first side flow passage 11 flows in a direction of the second side flow passage 12 via the L-shaped through hole 14 of the ball plug 13 from the opposite side of the cap body 19 and flows in the direction of the space section 20 via the branched flow passage 21 of the valve housing 10 and the through flow passage 22 at the side of the cap body 19. Therefore, the fluid which flows into the ball plug 13 from the first side flow passage 11 under the open valve state flows smoothly in the L-shaped through hole 14 in the direction to the second side flow passage 12. The fluid from the branched flow passage 21 does not enter into the ball plug 13 (L-shaped through hole 14). Accordingly, there is no collision of the fluids in the ball plug 13, in contrast to the prior art valve in which the fluid flows to the relative direction in the ball plug 13. Thus in the valve of the present invention there is no pressure loss due to the collision of the fluids. Besides, a fluid which flows into the inside space 20 of the cap body 19 via the through flow passage 22 from the branched flow passage 21 operates on the opposite side of the first seat ring 16 in the ball plug 13, so that the fluid operates from both sides of the first side seat ring 16 and the second side seat ring 17. Then, since the fluid pressure becomes approximately equal, a friction between the seat rings 16 and 17 and the ball plug 13 is reduced, so that the lifespan of the seat rings 16 and 17 can be extended and the operational torque can be reduced.

Next, when replacing the seat rings 16 and 17 or the ball plug 13, when the cap body 19 is removed from the ball demounting aperture 18 of the valve housing 10, the seat ring 17 at one side is removed with the cap body 19, and the ball demounting aperture 18 is opened. The ball plug 13 and the seat ring 16 at the other side are sequentially removed from this ball demounting aperture 18, and replacement is completed.

According to the embodiment 1 described above, since the fluid from the branched flow passage 21 does not flow into the ball plug 13, there is no collision in the ball plug between the fluid from the first side flow passage 11 and the bypass fluid from the branched flow passage 21, and since only the fluid from the first side flow passage 11 smoothly flows into the L-shaped through hole 14 of the ball plug 13 in the direction to the second side flow passage 12, there is an effect that there is no pressure loss due to the collision of the fluids in the ball plug 13. Further, the fluid pressure at which the branched fluid from the branched flow passage 21 operates on the ball plug 13 does not rely on the caliber of the flow passages 21 and 22 by the Pascal's principle. Therefore the caliber of these flow passages 21 and 22 need not be enlarged. Thus, since the caliber of the both flow passages 21 and 22 can be reduced, there is an effect that the size and weight of the whole valve can be reduced. Moreover, since the through flow passage 22 can be formed straight and short with reference to the peripheral wall 19a of the cap body 19, there is an effect that the forming and processing of the cap body 19 is simplified thereby making its cost lower.

### Embodiment 2

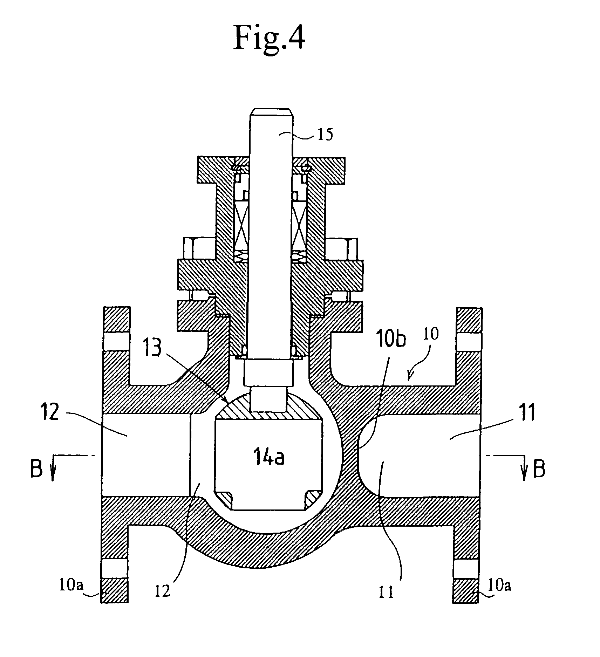

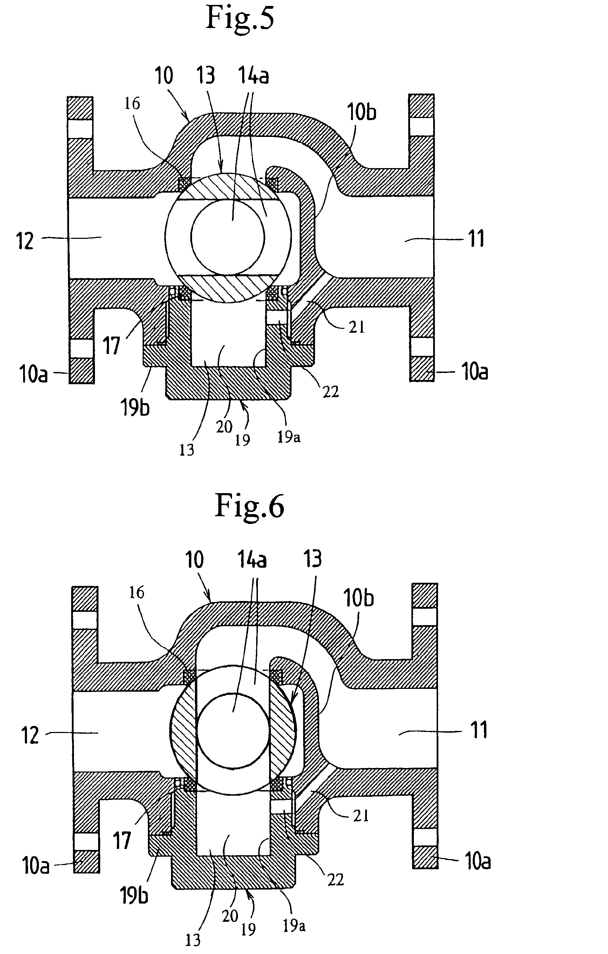

Fig. 4 is a longitudinally sectional view showing a ball valve according to an embodiment 2 of the present invention, and Fig. 5 is a sectional view along line B-B in Fig. 4, and indicates a closed valve state. Fig. 6 is a sectional view showing an open valve state of Fig. 4. The same reference numerals are assigned to the same parts or equivalent portions in Figs. 1 to 3 to omit the repetition of its description. In the figures, a reference numeral 14a denotes a through hole having an approximate T-shape and which is provided in the ball plug 13. In the embodiment 1 described above, although the L-shaped through hole 14 is formed on the ball plug 13, in this embodiment 2, the T-shaped through hole 14a is provided in lieu of the L-shaped through hole 14. When the valve is under the open valve state, the first side flow passage 11 is connected with the second side flow passage 12 by this through hole 14a with the angle of 90 degrees, as well as the first side flow passage 11 and the inside space 20 of the cap body 19 are connected so as to make a strait line shape. In this embodiment 2, on the open valve state shown in Fig. 6, inside the ball plug 13 (inside the T-shaped through hole 14a), the fluid from the first side flow passage 11 collides with the bypass fluid from the branched flow passage 21. However, since the branched flow passage 21 and the though flow passage 22 have a small caliber, and the amount of fluid flowing into the ball plug 13 from the side of the first seat ring 16 is small, even if the fluid from the first side flow passage 11 and the bypass fluid from the branched flow passage 21 collide each other inside the ball plug 13, the collision is small. Therefore, pressure loss due to collision is also reduced. In respect to other points, the same effects can be obtained as the embodiment 1.

### Embodiment 3

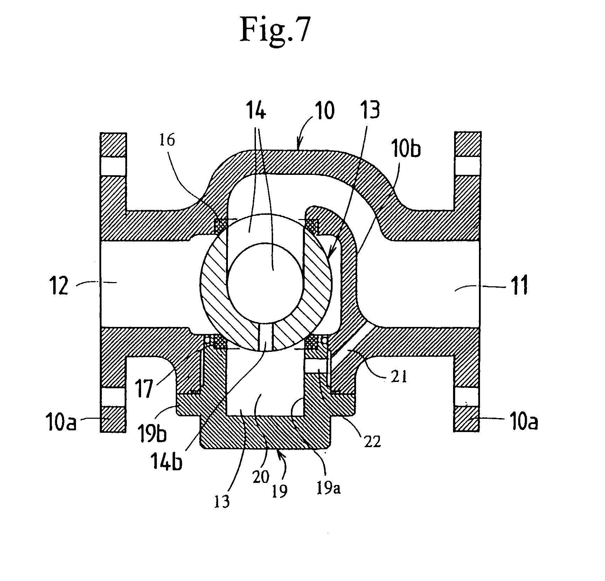

Fig. 7 is a horizontal sectional view showing a ball valve according to an embodiment 3 of the present invention, and the same reference numerals are assigned to parts which are the same as or equivalent to of Figs. 1 to 6 to omit the repetition of its description. In the figure, a reference numeral 14b shows a through hole provided to the ball plug 13. The through hole 14b includes a minute hole, and connects the L-shaped through hole 14 of the ball plug 13 with the inside space 20 of the cap body 19 when the valve is under the open valve state. In this embodiment 3, the through hole 14b having a minute hole for connecting the L-shaped through hole 14 and the inside space 20 of the cap body 19 at the opposite side of a connection part of the first side flow passage 11 of the L-shaped through hole 14 is provided on the ball plug 13 in the embodiment 1. Therefore, also in the embodiment 3, although the collision of the fluids which occurs in the ball plug 13 in an open valve state is similar to the embodiment 2 described above, as the through hole 14b is minute, the amount of the fluid flowing from the through hole 14b into the L-shaped through hole 14 of the ball plug 13 is very low. Thus pressure loss due to the collision is reduced. In other respects, the same effects can be obtained as the embodiment 1.

The preferred embodiments of the present invention were described above, but the descriptions are only for illustrations, and it should be interpreted so that variations and changes of the above descriptions may be performed without departing from the spirit and the scope of the following claims.

## Claims

1. A ball valve comprising:
a valve housing which forms a first side flow passage and a second side flow passage;
a ball plug which is placed in said valve housing and which has an L-shaped through hole connecting said first side flow passage with said second side flow passage in a direction of an angle of 90 degrees;
first and second seat rings located in said first side flow passage and an opposite side thereof so as to contact with said ball plug;
a valve shaft which is coupled to said ball plug for rotationally operating said ball plug in a direction that an opening area of said L-shaped through hole with reference to said first side flow passage is changed; and
a branched flow passage which is branched from said first side flow passage for making operation of a pressure of a branched flow of a fluid at a first side from said opposite side of said first side flow passage with reference to said ball plug.

2. A ball valve according to claim 1, wherein said valve housing has a ball demounting aperture at said opposite side of said first side flow passage, and a cap body, having a cup shape, in which a branched flow passage is connected with said ball demounting aperture and which is detachably installed to said ball demounting aperture, and wherein a peripheral wall of said cap body includes a through hole for introducing a fluid from said branched flow passage into an inside of said cap body.

3. A ball valve comprising:
a valve housing which forms a first side flow passage and a second side flow passage;
a ball plug which is placed in said valve housing and which has a through hole connecting said first side flow passage with said second side flow passage in a direction of an angle of 90 degrees;
first and second seat rings located said first side flow passage and an opposite side thereof so as to contact with said ball plug;
a valve shaft which is coupled with said ball plug for rotationally operating said ball plug in a direction that an opening area of said through hole with reference to said first side flow passage is changed; and
a branched flow passage which is branched from said first side flow passage for making operation of a pressure of a branched flow of a fluid at a first side from said opposite side of said first side flow passage with reference to said ball plug.

4. A ball valve according to claim 3, wherein said valve housing has a ball demounting aperture at said opposite side of said first side flow passage, and a cap body, having a cup shape, in which a branched flow passage is connected with said ball demounting aperture and which is detachably installed to said ball demounting aperture, and wherein a peripheral wall of said cap body includes a through hole for introducing a fluid from said branched flow passage into an inside of said cap body.
